# EUROPEAN PATENT SPECIFICATION

(11) **EP 0 363 888 B1**
(45) Date of publication and mention of the grant of the patent: **19.01.1994**
(21) Application number: 89118775.9
(22) Date of filing: 10.10.1989
(51) Int. Cl.: A01N 31/06

(54) **The use of L-(-)-menthol as acaricide**
Die Verwendung von L-(-)-Menthol als Akarizid
L'Utilisation du L-(-)-menthol en tant qu'acaricide

(30) Priority: 11.10.1988 JP 255634/88
(43) Date of publication of application: 18.04.1990
(73) Proprietor: DAIKIN INDUSTRIES, LIMITED, Osaka-shi, Osaka-fu (JP)
(72) Inventor: Suita, Yasunori, Matsubara-shi Osaka-fu (JP); Masutani, Tetsuya, Osaka-shi Osaka-fu (JP)
(74) Representative: Hansen, Bernd, Dr. Dipl.-Chem.

(56) References cited:
- DERWENT CENTRAL PATENT INDEX, BASIC ABSTRACTS JOURNAL, section C: AGDOC, week 8448, 30 January 1985, Derwent Publications Ltd., London (GB)#
- DERWENT CENTRAL PATENTS INDEX, BASIC ABSTRACTS JOURNAL, section C: AGDOC, week C38, 12 November 1980, Derwent Publications Ltd., London (GB)#

## Description

### BACKGROUND OF THE INVENTION

### Field of the Invention

The present invention relates to the use of L-(-)-menthol as an acaricide and to an acaricidal preparation and an acaricidal composition containing the same. The acaricide and the acaricidal preparation and composition are intended to kill or repel indoor acarids.

### Description of the Related Art

Dermatophagoides farinae and Dermatophagoides pteronyssinus may cause dermatitis and allergy. Chelacaropsis sp. bites may induce an itch. Thus, such indoor acarids are harmful to human health and deteriorate hygienic conditions.

For the purpose of controlling the acarids, many insecticides, for example organic phosphates and pyrethroids, have been proposed and marketed. However, they have unsatisfactory efficacy, that is they can suppress the proliferation of the acarids only temporarily. Accordingly, repeated use of the insecticides will be required, which is toxic especially for children and old people rather than hygienically advantageous, in particular, in case of spray-type synthetic insecticides.

It has been recognized that the acarids are growing typically in bedding such as a mattress, a blanket, a pillow and sheets. The epidemiological correlation between the fact with a fit of asthma while being in bed is pointed out by many physicians. However, there has never been known an efficient and safe acaricide.

### SUMMARY OF THE INVENTION

An object of the present invention is to provide a highly effective and safe acaricide.

The present inventors have now found that L-(-)-menthol has a strong controlling effect against the indoor acarids.

Accordingly, the present invention provides the use of L-(-)-menthol as an acaricide, an acaricidal preparation in the form of a synthetic resin molding containing L-(-)-menthol as an active substance, and an acaricidal composition consisting of the acaricidal preparation and a desiccant.

### BRIEF DESCRIPTION OF THE DRAWINGS

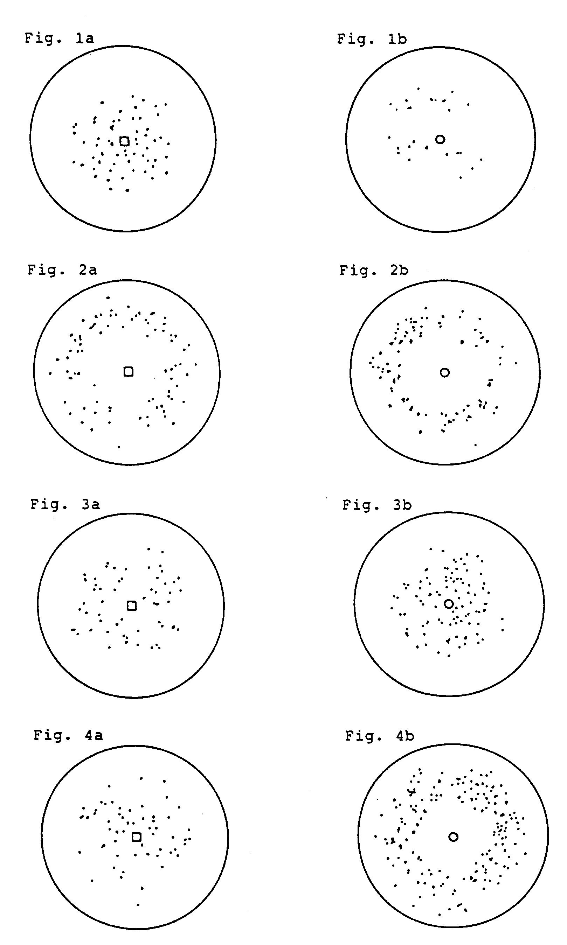

Figs. 1a, 1b, 2a, 2b, 3a, 3b, 4a and 4b show the acarids-repelling effect after placing the present acaricide and acaricidal preparation in dishes containing the acarids. The subscripts "a" and "b" to the figure numbers correspond to the acaricide and the acaricidal preparation, respectively. Black points in the figures show the location of the acarids.

Figs. 1a and 1b show the acarids-repelling effect immediately after the placement of the samples which were used immediately after their preparation.

Figs. 2a and 2b show the acarids-repelling effect ten minutes after the placement of the samples which were used immediately after their preparation.

Figs. 3a and 3b show the acarids-repelling effect immediately after the placement of the samples which were used 24 hours after their preparation.

Figs. 4a and 4b show the acarids-repelling effect ten minutes after the placement of the samples which were used 24 hours after their preparation.

### DETAILED DESCRIPTION OF THE INVENTION

L-(-)-Menthol, which is one of the principal components of peppermint oil, is completely safe for human bodies and has been used in cosmetics, food, medicine and so on.

Although peppermint oil as such is of course acaricidally active, it is less effective than L-(-)-menthol per unit weight as shown in below described Example 1. Further, peppermint oil cannot always be expected to show uniform activity, since the composition of such natural material may vary. Therefore, L-(-)-menthol is more preferred as the acaricide than peppermint oil.

Also in the production of the present acaricidal preparation which is described below, L-(-)-menthol is more advantageous than peppermint oil. At a normal temperature, the former is present in a crystalline form, while the latter is in a liquid form. Therefore, the former can be more easily kneaded with the synthetic resin and then molded, particularly when the active substance is used in a high concentration.

L-(-)-Menthol is a highly volatile material. Therefore, it can be used as such when temporary acaricidal effect is required.

In order to meet the general requirement of long-lasting acaricidal activity, L-(-)-menthol can be incorporated into the synthetic resin molding. L-(-)-Menthol, which may be optionally encapsulated in a microcapsule or with cyclodextrin, is kneaded with the synthetic resin and then molded to obtain the present acaricidal preparation in the form of a sheet, plate, a pellet and so on.

The content of L-(-)-menthol in the preparation can be varied in the range of from 0.1 to 99 % by weight in consideration of, for example, the nature of the acarid to be controlled and the composition of the preparation.

As the synthetic resin, both thermosetting and thermoplastic resins can be used.

Examples of the thermoseting resin are urea-formaldehyde resin, melamine-formaldehyde resin, phenol novolak, resol resin, epoxy resin and unsaturated polyester resin. L-(-)-Menthol is dissolved or dispersed in a prepolymer of the thermoseting resin and then cured to form a desired shape.

As the thermoplastic resin, the following resins can be used: polyolefins such as polyethylene and polypropylene, halogenated polyolefins such as polyvinyl chloride and polyvinylidene chloride, polystyrene and derivatives thereof, acryl resin, polyacrylstyrene, ABS resin, polyacetal resin, polyethylene terephthalate resin and polybutylene terephthalate resin.

It is also possible to use an elastomer such as polybutadiene, polyisoprene, natural rubber or styrenebutadiene copolymer. In such a case, L-(-)-menthol is kneaded with the elastomer and then subjected to vulcanization.

From the resin molding, gaseous L-(-)-menthol is released gradually. The sustained acaricidal effect can be thus accomplished. The acarids are killed or repelled according to the concentration of gaseous menthol.

The sustained-release of L-(-)-menthol can be further improved, if menthol which is adsorbed by an inorganic material is incorporated in the synthetic resin. As the inorganic adsorbent, for example, silica gel, alumina, zeolite, calcium carbonate and active carbon can be used.

According to the present invention, the present acaricidal preparation containing L-(-)-menthol as the active substance can be combined with a desiccant such as calcium chloride, silica gel, sodium sulfate, magnesium sulfate, calcium carbonate or phosphorus pentoxide to prepare the acaricidal composition. With using the present acaricidal composition, the controlling of the acarids and the dehumidification of the bedding can be carried out simultaneously. Thus, the acaricidal composition is synergistically effective due to the content of the desiccant.

### PREFERRED EMBODIMENTS OF THE INVENTION

The present invention is explained further in detail by following Examples.

### Example 1

### Acaricidal effect against Dermatophagoides farinae

Twenty acarids were fixed on their back on a slide glass by pieces of a double-coated adhesive tape. The slide glass was placed in a plastic petri dish having a diameter of 14 cm (volume 240 ml).

Then, into the dish, a watch glass of 6 cm diameter containing a predetermined amount of a test material was placed. A filter paper piece containing water was also put into the dish for the purpose of moisture retention. Then, the dish was covered with a lid. Acaricidal effect was evaluated after 24 hours.

The test materials were L-menthol, L-menthone and peppermint oil.

As for L-menthol, since it was present in a crystalline form, it was dissolved in n-hexane and poured into the watch glass. The solvent was then evaporated at a normal temperature to prepare a L-menthol sample.

As a control, the same examination was carried out without using any test material.

The results were as follows:

| Acaricidal effect: | | | |
|---|---|---|---|
| L-Menthol | 0.5 mg | 0.4 mg | 0.3 mg |
| Effect | ++ | + | - |
| L-Menthone | 1.5 mg | 1.2 mg | |
| Effect | ++ | - | |
| Peppermint oil | 1.5 mg | 1.2 mg | |
| Effect | ++ | - | |
| Note: ++ = complete death + = death rate 80 % - = death rate less than 30 % | | | |

### Example 2

### Comparison of the durability of the acaricidal effect of L-(-)-menthol and pellets containing the same against Dermatophagoides farinae

In the same petri dish as used in Example 1, a watch glass containing a test material was placed. After leaving the dish uncovered for two hours, the same slide glass with 20 acarids as in Example 1 was placed in the dish. Then, the dish was covered with a lid and closed with a plastic film. After 15 hours, the surviving acarids were counted.

The following test materials were used.
A. 1 mg of L-(-)-menthol
B. 3 pellets of total weight of 50 mg, which was prepared by incorporating L-(-)-menthol (total weight of 0.8 mg) into Solprene® which is a resin sold by ASAHI CHEMICAL INDUSTRY.

The results were as follows:

| Test material | The number of the survivor |
|---|---|
| A | 20 |
| B | 0 |

### Example 3

### Comparison of the durability of the acarids-repelling effect of L-(-)-menthol and a pellet containing the same against Tyrophagus putrescentiae

A piece of filter paper (2 x 2 mm) adsorbing 0.3 mg of L-(-)-menthol and one pellet containing 0.24 mg of L-(-)-menthol which was prepared in the same way as the pellets in Example 2 were used as the test samples. These samples were examined immediately after their preparation and after storage for 24 hours at a room temperature.

Into petri dishes each having 6 cm diameter, a lot of the acarids were introduced. Each sample was put in the center of the dish. Photomicrographs of the dishes were taken immediately after and ten minutes after the placement of the samples. A copy of a series of photomicrographs is shown by the figures, black points in the figures showing the location of the acarids.

Figs. 1a and 1b show the acarids-repelling effect immediately after the placement of the samples which were used immediately after their preparation. Hereinafter, the subscripts "a" and "b" to the figure numbers correspond to the filter paper sample and the pellet sample, respectively.

Figs. 2a and 2b show the acarids-repelling effect ten minutes after the placement of the samples which were used immediately after their preparation.

Figs. 3a and 3b show the acarids-repelling effect immediately after the placement of the samples which were used 24 hours after their preparation.

Figs. 4a and 4b show the acarids-repelling effect ten minutes after the placement of the samples which were used 24 hours after their preparation.

## Claims

1. The use of L-(-)-menthol as an acaricide.

2. An acaricidal preparation in the form of a synthetic resin molding, which contains L-(-)-menthol as an active substance.

3. The acaricidal preparation of claim 2, wherein an inorganic adsorbent with L-(-)-menthol is incorporated in the synthetic resin.

4. The acaricidal preparation of claim 2, which is in the form of a pellet.

5. An acaricidal composition consisting of the acaricidal preparation of claim 2 and a desiccant.

## Patentansprüche

1. Verwendung von L-(-)-Menthol als ein Milbenbekämpfungsmittel.

2. Milbenbekämpfungspräparat in der Form einer synthetischen Harzform, umfassend L-(-)-Menthol als eine aktive Substanz.

3. Milbenbekämpfungspräparat nach Anspruch 2,
dadurch **gekennzeichnet**, daß
ein anorganisches Adsorbens mit L-(-)-Menthol in das synthetische Harz eingefügt ist.

4. Milbenbekämpfungspräparat nach Anspruch 2,
dadurch **gekennzeichnet**, daß
es in der Form eines Kügelchens vorhanden ist.

5. Milbenbekämpfungszusammensetzung, bestehend aus dem Milbenbekämpfungspräparat nach Anspruch 2 und einem Trocknungsmittel.

## Revendications

1. Utilisation de L-(-)-menthol comme acaricide.

2. Préparation acaricide sous forme de pièce moulée en résine synthétique, contenant du L-(-)-menthol comme principe actif.

3. Préparation acaricide selon la revendication 2, dans laquelle un adsorbant inorganique portant du L-(-)-menthol est incorporé dans la résine synthétique.

4. Préparation acaricide selon la revendication 2, laquelle se présente sous la forme d'une boulette.

5. Composition acaricide constituée par la préparation acaricide selon la revendication 2 et un déshydratant.
